## Europäisches Patentamt

## European Patent Office

## Office européen des brevets

(11) Veröffentlichungsnummer: **0 191 892 B1**

(12) **EUROPÄISCHE PATENTSCHRIFT**

(45) Veröffentlichungstag der Patentschrift: **18.12.91**

(51) Int. Cl.⁵: **B32B 5/16**, B32B 19/02, B32B 18/00, B32B 15/16, B32B 27/20, B32B 33/00

(21) Anmeldenummer: **85108215.6**

(22) Anmeldetag: **03.07.85**

(54) **Formkörper in Stützkernbauweise und Verfahren zur Herstellung desselben.**

(30) Priorität: **16.02.85 DE 8504480 U**

(43) Veröffentlichungstag der Anmeldung:
**27.08.86 Patentblatt 86/35**

(45) Bekanntmachung des Hinweises auf die
Patenterteilung:
**18.12.91 Patentblatt 91/51**

(84) Benannte Vertragsstaaten:
**DE FR GB IT**

(56) Entgegenhaltungen:
| | |
|---|---|
| AT-B- 324 923 | AT-B- 353 670 |
| AT-B- 354 927 | DE-A- 2 311 075 |
| DE-A- 2 600 026 | DE-A- 3 123 134 |
| GB-A- 1 520 450 | US-A- 4 301 204 |

(73) Patentinhaber: **Pott, Richard**
**Tannenbergstrasse 33**
**W-4937 Lage(DE)**

(72) Erfinder: **Pott, Richard**
**Tannenbergstrasse 33**
**W-4937 Lage(DE)**

(74) Vertreter: **Stracke, Alexander, Dipl.-Ing. et al**
**Jöllenbecker Strasse 164**
**W-4800 Bielefeld 1(DE)**

## Beschreibung

Die Erfindung betrifft einen Formkörper in Stützkernbauweise gemäß dem Oberbegriff des Anspruchs 1 und ein Verfahren zur Herstellung desselben.

Ein Formkörper der gattungsgemäßen Art ist aus der DE-A 31 23 134 bekannt.
Bei dem darin gezeigten und beschriebenen Formkörper bestehen die den Stützkern bildenden anorganischen Körner aus Mikrohohlglaskugeln, die jedoch eine relativ geringe Belastbarkeit aufweisen, so daß der Formkörper, um eine geforderte Belastung aufnehmen zu können, relativ groß dimensioniert werden muß.

Ein weiterer Nachteil ist darin zu sehen, daß Mikrohohlglaskugeln relativ teuer sind, so daß, insbesondere unter dem Gesichtspunkt, daß gattungsgemäße Formkörper serienmäßig und in großer Menge hergestellt werden, eine im wünschenswerten Rahmen kostengünstige Herstellung nicht möglich ist.

Weiter ist aus der DE-A 31 23 134 bekannt, Deckschichten einzusetzen, die mehr oder weniger Stabilität geben. Dabei ist man bemüht, die Decklagen in möglichst großem Abstand von der neutralen Achse anzuordnen, wodurch Querschnitte mit großen Trägheitsmomenten, ähnlich dem Doppel-T-Trägerprinzip entstehen.

Als Decklagenmaterial wird Aluminium eingesetzt. Es ist aber auch bekannt, Thermoplaste oder Gewebe zu verwenden.

Weiter weist der bekannte Formkörper in Plattenform eine sehr geringe Schubfestigkeit des Stützkernes auf. Auch ist die homogene Verbindung zwischen Deckschicht und Stützkern nicht immer gewährleistet. Ferner werden mit den bislang verwendeten Materialien und Herstellungsverfahren weder die gewünschte Druckfestigkeit noch ein hoher Zugelastizitätsmodul oder andere isotrope Eigenschaften erreicht. Außerdem ist das Preis/Nutzenverhältnis ebenfalls sehr schlecht. In Folge der geringen Lochleibungsfestigkeit ist es auch nicht möglich, z. B. kraftschlüssige mechanische Verbindungen mittels Verschraubungen, Vernietungen oder dergleichen herzustellen.

Es wird aber insbesondere in der Luft-und Raumfahrt sowie im Fahrzeugbau bei Land-, Schienen- und Wasserfahrzeugen gewünscht, daß derartige Formkörper in Stützkernbauweise aufgrund ihres geringen Gewichtes einsetzbar sind, wobei die Forderung besteht, daß sie bei geringstmöglicher Dimensionierung eine sehr hohe Stabilität aufweisen.

Dieser Forderung werden jedoch die bekannten Materialien nicht gerecht, da sie nur geringe Kräfte aufnehmen können und bei Versagen einer der beiden, die Zug- und Druckkräfte aufnehmenden Deckschichten es meistens zur Aufhebung des Sandwicheffektes und damit zum Bruch des Bauteiles kommt. Des weiteren besteht ein Nachteil darin, daß das vorbekannte Stützkernmaterial während der Herstellung des Formkörpers nicht beeinflußt werden kann, um so z.B. dem Einsatzzweck entsprechend unterschiedliche Kernhöhen zu erzielen.

Die geschilderten Nachteile ergeben sich im wesentlichen auch bei einem Formkörper wie er aus der AT-B 324 923 bekannt ist und bei dem das Kunstharz auf die aus anorganischem Material gebildeten Körner aufgesprüht sind, wobei sich beim Verpressen der einzelnen Körner zu einem Formkörper zwischen den Körpern Zwischenräume bilden, die ursächlich dafür verantwortlich sind, daß die Belastbarkeit des Formkörpers relativ gering bleibt.

Der vorliegenden Erfindung liegt daher die Aufgabe zugrunde, einen Formkörper und ein Verfahren zur Herstellung desselben zu schaffen, bei dem nur ein Bruchteil an Herstellungskosten entstehen und außerdem die genügende Stabilität gewährleistet ist in bezug auf die Zug-, Druck-, Scher-, Schub-, Biege- und Torsionskräfte, so daß das Einsatzspektrum für derartige Formkörper erheblich vergrößert werden kann.

Diese Aufgabe wird durch die im Kennzeichen des Anspruchs 1 und im Kennzeichen des ersten Verfahrensanspruchs aufgeführten Merkmale gelöst.

Die Kombination entsprechend der Erfindung, daß nämlich einerseits die anorganischen Körner aus einem keramischen Material bestehen und andererseits die zwischen den Körnern gebildeten Zwischenräume durch das verschäumte Kunstharz ausgefüllt sind, führt zu einer erheblich höheren Belastbarkeit des Formkörpers als dies bislang bei einem Hohlformkörper möglich war, dessen Zwischenräume nicht oder nur teilweise mit Kunstharz ausgefüllt sind.

Darüber hinaus ist das in großen Mengen handelsüblich zu erwerbende keramische Material, beispielsweise Blähton oder Bimsstein, sehr preiswert.

Die Herstellung des erfindungsgemäßen Formkörpers wird somit einmal durch den Einsatz des preiswerteren Materials und zum andern durch die geringere erforderliche Dimensionierung verbilligt.

Der erfindungsgemäße Formkörper, z. B. in Form einer ebenen Platte, erzielt zudem noch eine feuerhemmende Wirkung, so daß Bauteile mit einem derartigen Stützkern und ebenfalls feuerhemmenden Deckschichten in brandgefährdeten Bereichen, z. B. als Brand- bzw. Kollisionsschotte auf Schiffen oder als Türen und Trennwände in Heizungsbereichen eingesetzt werden können. Als Baumaterial ohne spätere Schadstoffemissionen, anders als beispielsweise derzeitige formaldehydgebundene Spanplatten, eignet sich der erfindungsgemäße Formkörper für die vielfältigsten Anwendungen, insbesondere in Folge seiner Witterungs- und Alterungsbeständigkeit sowie seiner sehr guten isolierenden Eigenschaften. Das spielt besonders bei Verwendung im Freien eine wesentliche Rolle. Von großem Nutzen ist die Möglichkeit, dem Formkörper eine beliebige Form zu geben, so daß derselbe auch als Haube, Abdeckung, Profil und Träger und auch im kontinuierlichen Herstellungsverfahren produziert werden kann.

Erzielt werden die besonderen Eigenschaften durch die Verwendung von Blähton oder Bims bzw. deren Mischform als Pellets, Kügelchen oder Granulat, die mit härtbarem, flüssigem Kunststoff, wie z. B. Epoxyd- oder Polyesterharz ummantelt sind. Es kann jedes kalt- oder warmhärtbares Kunstharz Verwendung finden. Der aus dieser Materialkombination bestehende Stützkern ist in der Lage, für sich allein bereits hohe Kräfte aufzunehmen.

Nachfolgend sollen einige Zwecke für die Verwendung der erfindungsgemäßen Formkörper aufgeführt werden, und zwar als

Beispiele:

1. Als Bodengruppen- und Trennwände im Waggonbau, aber auch als Dachkonstruktionen für dieselben.
2. Im Fahrzeugbau als Aufbauten bei Isolier- und Kofferfahrzeugen. Ferner als Spoiler, Hauben und Unterflurbehälter für Omnibusse.
3. Im Bauwesen als Trennwände, Fassaden-Isolierverkleidungen, Flachdachkonstruktionen sowie als Abdeckhauben und Isolierschächte.
4. In der Unterhaltungselektronik als Lautsprechergehäuse und ganz allgemein als Gerätebox.
5. Im Maschinenbau als Sockel, Konsole und Abdeckung.
6. Im Behälterbau als Wandelement.
7. In der Möbelindustrie in Plattenform mit Dekoroberfläche für Fronten, Seiten und Rückwände.
8. Im Tiefbau als Lauf- und Fahrdecke für Schnellmontagebrücken.

Die Aufzählung der Einsatzmöglichkeiten der Formkörper in Stützkernbauweise erhebt keinen Anspruch auf Vollständigkeit.

Weitere Kennzeichen und Merkmale ergeben sich aus den nachfolgend beschriebenen Ausführungsbeispielen.

Es zeigen:

Fig. 1      ein Formkörper in Stützkernbauweise, teilweise gebrochen im Schaubild,

Fig. 2      ein weiteres Ausführungsbeispiel, ebenfalls im Schaubild,

Fig. 3      das Ausführungsbeispiel eines Formkörpers in Form einer Halbrundschale,

Fig. 4,5,6 u.7      weitere Ausführungsbeispiele, jeweils im Schaubild

Fig. 8      zeigt schematisch die einzelnen Stationen eines möglichen Verfahrens zur Herstellung der Formkörper in Stützkernbauweise,

Fig. 9      eine weitere Möglichkeit den Formkörper herzustellen in schematischer Seitenansicht.

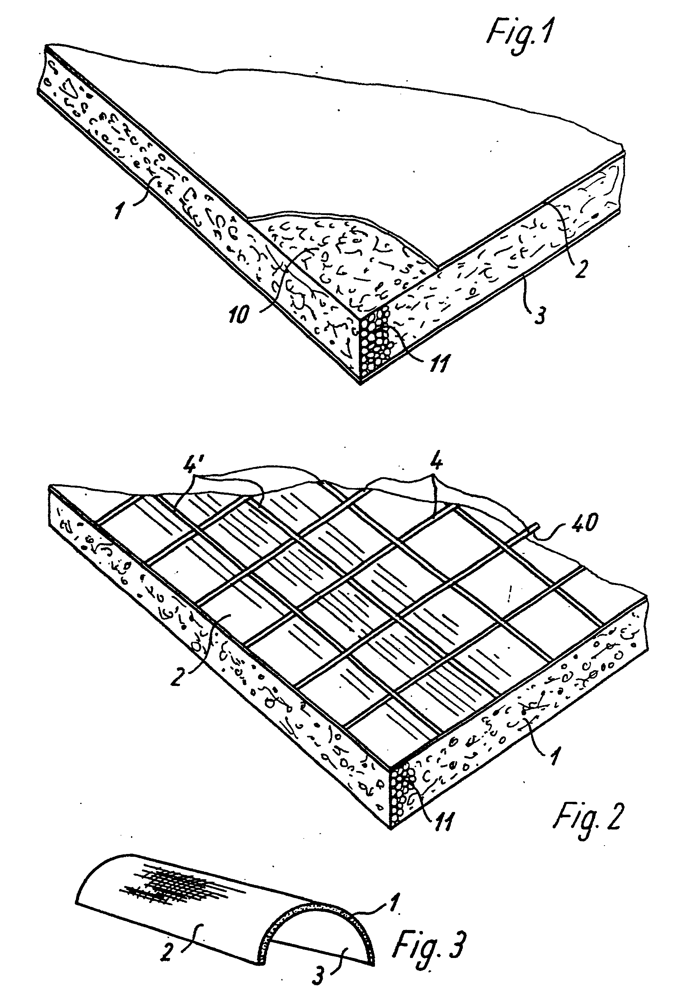

Figur 1 ist ein erfindungsgemäßer Formkörper in Stützkernbauweise dargestellt in Form einer Platte. Sichtbar sind die Schnittkanten des Stützkernes 1 sowie die obere Deckschicht 2 und die untere Deckschicht 3. Von der oberen Deckschicht 2 ist die vordere Ecke herausgebrochen, so daß die Oberfläche 10 des Stützkernes 1 sichtbar wird. Der Stützkern besteht aus keranischem, gekörnten Material. Besonders vorteilhaft ist die Verwendung von Blähton und/oder Bimssteinen.

Der Stützkern 1 ist zu beiden Seiten verbunden durch die beiden Deckschichten 2 und 3 zu einem homogenen Konstruktionselement, das sehr wohl Zug-, Druck-, Scher-, Schub-, Biege- und Torsionskräfte aufnehmen kann und ein günstiges Gewichts/Festigkeitsverhältnis hat. Bauteile oder Formkörper aus den erfindungsgemäßen Konstruktionselementen sind schwimmfähig. Der Stützkern selbst aus Blähton oder Bims kann auch in Mischform Verwendung finden, auch als Pellets, Kügelchen oder Granulat. Das gekörnte Material wird mit warm- oder kalthärtbarem Kunstharz wie z.B. Epoxyd- oder Polyesterharz oder auch Phenolharz dadurch ummantelt, daß die Kügelchen, das Granulat oder die Pellets mit Kunstharz innig vermischt werden. Die aus dieser Materialkombination bestehende Masse wird anschließend gepreßt und/oder verdichtet ggf. durch Wärmeerzeugung und/oder Wärmezuführung auspolymerisiert. Bei der Vermischung des Blähtons oder der Bimssteine in erforderlicher Korngröße muß diese derart erfolgen, daß jedes Einzelkorn von der flüssigen Kunstharzmischung vollständig umhüllt ist. Es besteht aber auch die Möglichkeit, die so entstandene breiartige Masse in eine beliebige Form zu füllen und dort durch mechanische Verdichtung oder z. B. durch Ultraschall zu verpressen und ggf. kalt durch die Polymerisation der Harzkomponenten auszuhärten, je nachdem ob ein warm- oder kalthärtbares Kunstharz Verwendung gefunden hat.

Während der Polymerisationsphase wird das Kunstharz aufgeschäumt. Auf diese Weise werden die Hohlräume 11 zwischen den sich gegeneinander abstützenden Blähtonteilen bzw. Bimssteinteilen ausgefüllt und so eine homogene selbsttragende Struktur erreicht. Die Schaumbildung der nicht zur Blähton- bzw. Bimssteinkörnchen-Ummantelung benötigten, also überschüssigen Kunstharzmenge, erfolgt durch eine Überreaktion während der Polymerisation. Diese Überreaktion wird eventuell ausgelöst durch eine äußere, ggf. verstärkte Wärmezuführung und/oder eine Härterüberdosierung. Normalerweise wird bei der Kunstharzzuführung das angegebene Harz/Härterverhältnis eingehalten. In diesem Fall erfolgt keine Schaumbildung und man erreicht ein normales gewünschtes Festigungsverhältnis. Wird der Härter überdosiert, erfolgt eine verstärkte Wärmeentwicklung und es erfolgt die gewünschte Schaumbildung. Die Größe der Überdosierung muß jeweils empirisch ermittelt werden, je nachdem, welche Harzkomponenten Verwendung finden.

Als Deckschicht können die unterschiedlichsten Materialien Verwendung finden, es können Oberfläche und Unterfläche mit einer Deckschicht versehen sein, aber auch die Seitenflächen, wenn beispielsweise der Formkörper als Tragbalken Verwendung finden soll. Falls der Formkörper sehr hohen, späteren Biege-, Zug-, Druck-, Schub- und Torsionsbelastungen ausgesetzt ist, ist es sinnvoll, die Deckschichten aus faserverstärktem Kunststoff, bezeichnet auch als "Faserkunststoff" auf der Basis von Aramidfasern oder Carbonfasern, herzustellen. Es können aber auch Glasfasern Verwendung finden. Diese Fasern können als Gewebe und/oder Gewirke aufgelegt werden, vorzugsweise aber als Laminate in unidirektionaler Orientierung ihrer Fasern, kunstharzgetränkt, evtl. mit demselben Kunstharz oder einem ähnlichen Kunstharz wie beim Stützkern 1. Die ausgewählte Deckschicht wird somit mit einem gleichen oder ähnlichen Kunstharz imprägniert, wie sie in der keramischen Masse Verwendung gefunden hat, auf die vorgeformte keramische, ebenfalls imprägnierte Masse aufgelegt. Auf den noch harzfeuchten Stützkern wird einseitig, beidseitig oder allseitig das imprägnierte Fasergelege u./od.Gewebe bzw. Gewirke und/oder Geflecht als Matte aufgelegt. Dadurch wird die Matte bzw. die Deckschicht 2, 3 mit dem Stützkern 1 homogen verbunden und mit diesem zusammen unter Zuführung von Druck und evtl. von Wärme zu einer Einheit ausgehärtet. In einem weiteren oder dem gleichen Verarbeitungsvorgang kann eine zusätzliche Dekoraußenschicht in Form von z.B. Furnier, Blech, Schichtstoff, Marmor od.dgl. aufgebracht werden. Es besteht aber die Möglichkeit, ohne ein Laminat und auch ohne irgendeine Fasermaterial enthaltende Schicht ein Furnier, ein Blech, einen Schichtstoff oder Marmor mittels eines kalt- oder warmaushärtenden wetterfesten Haftvermittlerseine Deckschicht 2, 3 auf den Formkörper aufzubringen.

Es ist zwar vorteilhaft, zwischen dem keramischen Stützkern 1 und den Deckschichten 2, 3 aus Furnier, Blech, Schichtstoff, Marmor od.dgl. eine Fasermaterial enthaltende Schicht anzuordnen, da diese viele Kräfte auffängt, jedoch ist auch die Möglichkeit gegeben, ohne dazwischenliegenden Faserverbundwerkstoff thermoplastische oder duroplastische Decklagen oder Beschichtungen auf den Stützkern 1 des Formkörpers aufzubringen. Dies kann in flüssiger oder pastöser Form erfolgen. Als Deckschicht kann auch melaminharzgebundener Kunststoff als Platte aufgelegt werden, evtl. als Schichtstoff, ggf. mit Dekor.

Ferner besteht die Möglichkeit, eine Anzahl von Schichten übereinander aufzubauen, z.B. einen Formkörper aus mehreren Stützkernen 1 mit dazwischenliegender Deckschicht, die dann aufgeschnitten werden kann, falls gewünscht.

In Fig. 2 ist ein Formkörper dargestellt mit einem Stützkern 1, der nur einseitig eine Deckschicht 2 trägt, bestehend aus einer Faserkunststoffschicht in unidirektionaler Orientierung, wobei sich ein Dekor daraus ergibt, daß die unidirektionalliegenden Fasern durch querliegende, eine Verklebung od.dgl. aufweisende Materialstreifen 4 miteinander verbunden sind; um ein Karodekor zu erhalten, sind auch mit den Fasern liegende Materialstreifen 4' in das Laminat eingelegt. Diese Materialstreifen können aus dünnen Papier- oder Filzstreifen bestehen, die auf der Unterseite einen Permanentkleber 40 als Schicht tragen.

Wenn die Fig. 2 die Faserrichtung in der 0°-Linie, also nur in Längsrichtung der Platte zeigt, so besteht auch die Möglichkeit, unter der 0°-Linie und/oder oberhalb derselben in Querrichtung auf 90° weitere Faserlagen anzuordnen.

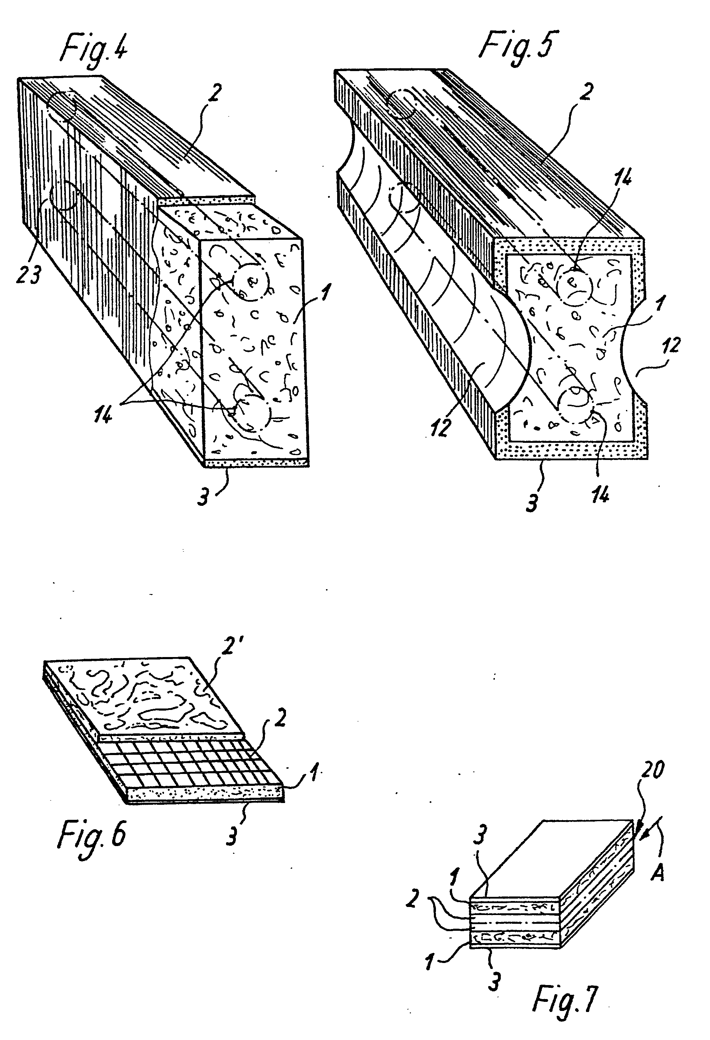

In Fig. 3 ist ein Beispiel gezeigt, bei dem der Formkörper in einer Halbrundschale in Form gelegt wurde. Dadurch erhält er selbst auch eine Halbrundschalenform. Dabei ist wieder die Stützkernschicht 1 als Schnittfläche zu sehen und die äußere Deckschicht 2 sowie die unteren Deckschicht 3. Wie aus dieser Figur hervorgeht, kann der Formkörper in Stützkernbauweise auch eine völlig andere Form haben als eine Plattenform. Er kann auch in der statisch neutralen Zone Hohlräume 14 aufweisen.

Dies geht auch aus den Fig. 4 und 5 hervor.

Die Fig. 4 zeigt einen Biegeträger für statische und dynamische Belastungen. Der Stützkern 1 ist hier vollständig ummantelt und in den Zug- und Druckzonen liegen die Verstärkungsfasern der Deckschicht 2 längs und in den Seitenwandungen sind die Deckschichten 23 senkrecht orientiert. Darauf kann noch eine Dekorbeschichtung kommen bzw. noch ein Echtholzfurnier aufgebracht werden,um beispielsweise einen Holzbalken vorzutäuschen. Jedes flachebene Material kann auf die Deckschichten 2, 3 oder auch 23 aufgesetzt werden. Das flachebene Material kann auch direkt auf den Stützkern aufgebracht werden.

In Fig. 5 ist ein Biegeträger mit Doppel-T-Trägereffekt dargestellt. In den Zug- und Druckzonen liegt die Faserorientierung längs, also auf 0° und in den Seitenflanken wiederum senkrecht, also auf 90°. Die Hohlkehle 12 kann auf verschiedene Art und Weise erzielt werden, entweder durch Bohrung zweier dicht an dicht liegender Biegeträger, durch praktisch spanabhebende Verformung oder von vornherein durch Formgebung mittels einer Preßform.

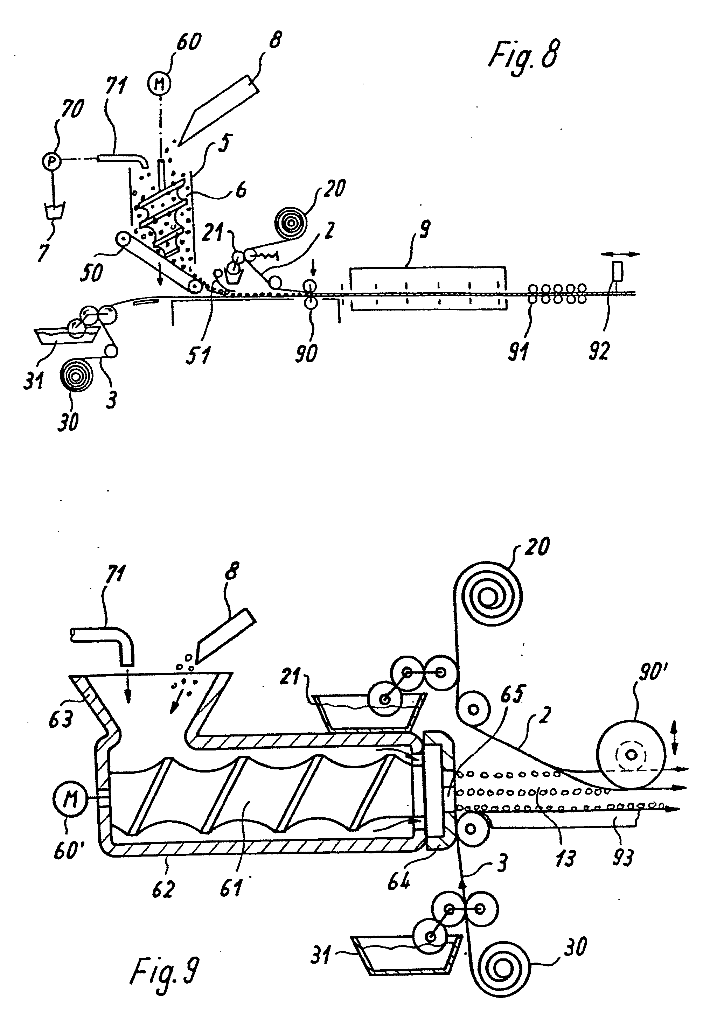

In Fig. 6 ist ein Formkörper mit beidseitigen Decklagen aus Faserverbundwerkstoff dargestellt. Auf den Faserverbund der Deckschicht 2 ist hier eine Beschichtung mit Marmor oder einem anderen spröden Material aufgebracht und mit dem Stützkern 1 homogen verbunden. Somit liegt auf der Deckschicht 2 noch eine Decklage 2'.

In Fig. 7 ist ein Ausführungsbeispiel gezeigt, bei dem zwei Stützkerne 1 angeordnet sind, die mit einer Marmorschicht 20 homogen über einen warm- oder kaltaushärtenden Haftvermittler verbunden sind. Diese Marmorschicht kann an der strichpunktierten Linie in Pfeilrichtung A aufgeschnitten werden, wobei dann die Schnittfläche die gewünschte Oberfläche ergibt.

In den Fig. 8 und 9 sind zwei unterschiedliche Verfahren zur Herstellung des erfindungsgemäßen Formkörpers dargestellt:

Fig. 8 zeigt ein kontinuierliches Plattenlaminierverfahren. Dabei laufen zwei Deckschichtbahnen 2 und 3 jeweils von Rollen 20 und 30 abgezogen durch ein Auftragswerk 21 und 31. Diese Auftragswerke entsprechen Farbwerken von Druckstationen. Die, wie oben beschrieben, entstandene breiige Masse wird in einen Behälter 5 eingegeben, beispielsweise durch eine Schnecke 6 in dem Behälter vermischt, wobei die Zugabe des kalt- oder warmaushärtenden Harzes aus einem Vorratsbehälter 7 kommend, über eine Pumpe 70 und Leitung 71 zugeführt wird. Hier können Dosiereinrichtungen vorgesehen werden u.dgl., wie z.B. die Zugabe der verkörnten Keramikmaterialien, ebenfalls in dosierter Form, dargestellt ist eine Rutsche 8.

Das Mischen erfolgt durch die durch Motor 60 angetriebene Schnecke 6. Als Boden des Behälters 5 ist ein Transportband 50 vorgesehen und dem Transportband 50 ist eine Abstreifrakel 51 nachgeordnet. Diese Abstreifrakel gibt die Höhe des Granulates bzw. der Kügelchen-Schicht oder der Schicht der Pellets an, die in diesem Bereich schon voll ummantelt sind. Die drei aufeinanderliegenden Schichten laufen dann anschließend in die Heizvorrichtung 9 und geraten vor und nach der Heizvorrichtung unter Rollenpaare 90 und 91.

Ein Schneidwerk 92 schneidet jeweils ein Plattenende ab.

In Fig. 9 ist ein weiteres Ausführungsbeispiel gezeigt. Auch hier laufen die Deckschichten 2 und 3 als Decklagenbahnen von Rollen 20 und 30 kommend an Harzauftragswerken 21 und 31 vorbei und legen sich auf die Schicht von verkörntem Keramikmaterial. Diese Schicht ist mit 13 in der Zeichnung bezeichnet. Das Keramikmaterial gerät in einen durch Motor 60' angetriebenen Extruder 61 mit Gehäuse 62 und Einfülltrichter 63, wobei der Extruder im vorderen Bereich seine Auslaufdüse oder seinen querschnittgebenden Teil 64 trägt. Der Querschnitt 65 bestimmt dann die Formgebung der Schicht 13. Auf diese Schicht 13 legt sich von oben kommend die die obere Deckschicht 2 gebende Decklagenbahn und von unten kommend die Lagenbahn, die die Deckschicht 3 bildet. Bei Weitertransport auf einem Tisch 93 gerät die Schicht 13 unter den Druck einer Druckrolle 90', die in der Formgebung dem Querschnitt 65 angepaßt ist und das verkörnte Keramikmaterial formt. Dabei muß berücksichtigt werden, daß das verkörnte Keramikmaterial mit dem Kunstharz eine breiige Masse und ein Gemisch bildet. Dieses kann auch in einem Gegenstrom-Zwangsmischer bzw. in einer Mischschnecke gemischt werden, homogenisiert und vorverdichtet. Außerdem besteht die Möglichkeit, sie genau mengendosiert auszustoßen.

Durch die Verpressung und Verdichtung durch die Walzenpaare 90 oder durch die Druckwalze 90' bzw. in einer beliebigen anderen Presse, wird die Formkörperstärke bestimmt. Die Höhe der Verpressung wird durch nicht dargestellte, den Weg der jeweiligen Preßkörper bestimmende Endanschläge begrenzt.

Es besteht nun die Möglichkeit, einen Durchlaufofen als Heizvorrichtung 9 auch dem Ausführungsbeispiel der Fig. 9 nachzuordnen. In der Heizvorrichtung bzw. im Durchlaufofen erfolgt die Polymerisation aller Komponenten und die Absaugung evtl. vorhandener Schadstoffe mit nachgeschalteter Auffang- bzw. Filteranlage. Die Ofenlänge muß der Durchlaufgeschwindigkeit und der erforderlichen Aushärtezeit angepaßt werden.

Nach dem Austritt aus der Ofenanlage kann dann wieder der bandförmige Formkörper gegebenenfalls kontinuierlich besäumt und abgelängt werden.

Auf die gleiche Art und Weise können Dekorschichten aufgebracht werden, beispielsweise durch Zuordnung einer beliebigen Decklage 2' zur Deckschicht 2 und/oder 3.

Auch die Ausformung unter Preßbacken ist denkbar und möglich.

Wie aus den unterschiedlichen Ausführungsbeispielen hervorgeht, läßt sich der Gedanke der Erfindung vielfach variieren. So kann man z.B. die Halbschalen der Fig. 3 zusammensetzen zu Rohren, man kann ferner die in Fig. 5 gezeigten Teile derart zusammensetzen, daß die Hohlkehlen 12 sich ergänzen und sich ebenfalls Hohlräume ergeben, durch die gegebenenfalls Installationen gezogen werden können. Es besteht aber auch die Möglichkeit, gemäß Fig. 4 Hohlräume anzuordnen einerseits zur Gewichtsersparung und gleichzeitig lassen sich diese Hohlräume nutzen, um Installationen durchzuführen, wenn dies gewünscht wird. So können Gasrohre, Wasserrohre, Heizungsrohre und auch elektrische Leitungen durch den Formkörper hindurchgeführt werden. Wenn die Hohlräume sich aneinander anschließen, läßt sich z.B. eine Unterflurheizung installieren. So sind zwei Möglichkeiten gegeben, einerseits Hohlräume beliebigen Querschnittes, rund, eckig, oval od.dgl., zur Gewichtseinsparung anzuordnen oder zur technischen Anwendung zu Installationszwecken. Diese in den Fig. 4 und 5 eingetragenen, strichpunktiert angedeuteten Hohlräume 14 können somit einen beliebigen Querschnitt haben, durch die ganze Platte hindurchgezogen werden oder nur Teilbereiche durchqueren. Die Darstellung in Fig. 4 und in Fig. 5 sind nur mögliche Beispiele.

**Patentansprüche**

1. Formkörper in Stützkernbauweise, dessen die statisch neutrale Zone bildender Stützkern (1) aus aus anorganischem Material gebildeten Körnern besteht, die von einem gehärteten Kunstharz umgeben sind, wobei der Stützkern (1) auf mindestens einer Oberflächenseite durch eine Deckschicht (2,3) abgedeckt und mit dieser verbunden ist, **dadurch gekennzeichnet,** daß die Körner aus einem keramischen Material bestehen und daß die zwischen den Körnern gebildeten Zwischenräume durch verschäumtes Kunstharz ausgefüllt sind.

2. Formkörper nach Anspruch 1, dadurch gekennzeichnet, daß die Deckschicht (2,3) über einen ausgehärteten Haftvermittler mit dem Stützkern (1) verbunden ist, wobei der Haftvermittler, vorzugsweise ein warm- oder kalthärtbares Kunstharz, die gleiche oder ähnliche Konsistenz wie das die Körner umgebende Kunstharz aufweist.

3. Formkörper nach Anspruch 1, dadurch gekennzeichnet, daß die Körner aus Blähton und/oder Bimsstein bestehen.

4. Formkörper nach Anspruch 1 oder 2, dadurch gekennzeichnet, daß die Deckschicht (2,3) aus mindestens einer Schicht unidirektionalliegender Fasern besteht, wobei die Fasern durch querliegende, eine Verklebung aufweisende Materialstreifen (4,4') miteinander verbunden sind.

5. Formkörper nach Anspruch 1 oder 2, dadurch gekennzeichnet, daß die Deckschicht (2,3) aus einer melaminharzgebundenen Kunststoffplatte, vorzugsweise Schichtstoffplatte besteht.

6. Formkörper nach Anspruch 1 oder 2, dadurch gekennzeichnet, daß die Deckschichten (2,3) aus Marmor und/oder Holz und/oder Furnier und/oder Kork bestehen.

7. Formkörper nach Anspruch 1, dadurch gekennzeichnet, daß im Formkörper in der statisch neutralen Zone Hohlräume (14) vorgesehen sind.

8. Formkörper nach einem der Ansprüche 1 bis 7, dadurch gekennzeichnet, daß die Deckschicht(en) (2,3) mit plattenartiger Oberfläche über eine darunterliegende Laminatschicht bzw. fasermaterialenthaltende Schicht mit dem Stützkern (1) verbunden ist (sind).

9. Formkörper nach einem der Ansprüche 1 bis 8, dadurch gekennzeichnet, daß eine Anzahl von Stützkernen (1) übereinander angeordnet ist unter Zwischenschaltung einer oder mehrerer Deckschichten (2,3).

10. Formkörper nach einem der Ansprüche 1 bis 9, dadurch gekennzeichnet, daß im Stützkern (1) eine weitere Deckschicht (2) angeordnet ist, die bedarfsweise parallel zu ihren Breitseiten auftrennbar ist.

11. Formkörper nach einem der Ansprüche 1 bis 10, bei dem der Stützkern (1) mit Deckschichten (2,3) und Seitenwandungsdeckschichten (23) ummantelt ist, dadurch gekennzeichnet, daß die einzelnen Deckschichten (2,3) unidirektionalliegende Fasern aufweisen, vorzugsweise mit einer Faserorientierung von 0° in den Zug- und Druckzonen zur Längsrichtung des Formkörpers, während sie an den Seitenflanken senkrecht dazu auf 90° liegen.

12. Verfahren zur Herstellung eines Formkörpers nach Anspruch 1, dadurch gekennzeichnet, daß zur Bildung des Stützkerns eine trockene Masse aus aus anorganischem, keramischem Material bestehenden Körnern mit einem flüssigen, warm- oder kaltaushärtbarem Kunstharz zu einer breiartigen Masse vermischt wird, daß die Masse geformt und auf die geformte Masse wenigstens eine Deckschicht aufgebracht wird und daß das Kunstharz verschäumt und unter Verpressung und/oder Verdichtung auspolymerisiert wird.

13. Verfahren nach Anspruch 12, dadurch gekennzeichnet, daß zunächst eine Deckplatte aus einem Gewebe, einem Gewirke, einem Gestrick oder Laminat hergestellt wird, das mit auspolymerisierbarem Kunstharz getränkt wird, wonach die Deckplatte mit der breiartigen Masse, bestehend aus kunstharzgetränktem Blähton und/oder Bimsstein beschichtet wird bzw. auf die Masse aufgelegt wird und anschließend durch mechanische Verdichtung, Verpressung und/oder Einfüllung in eine Form mit einer oder mehreren Deckplatten auspolymerisiert wird.

14. Verfahren nach Anspruch 12 und 13, dadurch gekennzeichnet, daß die Verdichtung der aus Blähton und/oder Bimsstein und polymerisierbarem Harz bestehende Masse durch Ultraschall erfolgt.

15. Verfahren nach Anspruch 12 und 13, dadurch gekennzeichnet, daß das verwendete Kunstharz in der Masse aus Blähton bzw. Bimsstein durch Überreaktion der Komponenten zum Aufschäumen gebracht wird.

16. Verfahren nach einem der Ansprüche 12 bis 15, dadurch gekennzeichnet, daß die breiartige Masse auf mit aushärtendem Haftvermittler versehene Deckschichten aufgebracht und anschließend mit diesen Deckschichten bis zur Aushärtung, ggf. unter Zwischenschaltung einer Aufheizung, verpreßt wird.

17. Verfahren nach Anspruch 16, dadurch gekennzeichnet, daß die Deckschichten aus Schichtstoff, Melaminharzplatten oder Marmor bestehen.

## Claims

1. A shaped object of supporting core type in which the supporting core (1) which forms the statically neutral zone comprises grains which are formed from inorganic material and which are enclosed by a hardened synthetic resin, wherein the supporting core (1) is covered on at least one surface side by a cover layer (2, 3) and is joined thereto, characterised in that the grains comprise a ceramic material and that the intermediate spaces formed between the grains are filled by foamed synthetic resin.

2. A shaped object according to claim 1 characterised in that the cover layer (2, 3) is joined to the supporting core (1) by way of a hardened bonding agent, preferably a hot-hardenable or cold-hardenable synthetic resin, which is of the same or similar consistency to the synthetic resin enclosing the grains.

3. A shaped object according to claim 1 characterised in that the grains comprise expanded clay and/or pumice.

4. A shaped object according to claim 1 or claim 2 characterised in that the cover layer (2, 3) comprises at least one layer of unidirectionally disposed fibres, wherein the fibres are joined together by transversely disposed material strips (4, 4') with glue.

5. A shaped object according to claim 1 or claim 2 characterised in that the cover layer (2, 3) comprises a melamine resin-bonded plastics panel, preferably a laminate panel.

6. A shaped object according to claim 1 or claim 2 characterised in that the cover layers (2, 3) comprise marble and/or wood and/or veneer and/or cork.

7. A shaped object according to claim 1 characterised in that cavities (14) are provided in the shaped object in the statically neutral zone.

8. A shaped object according to one of claims 1 to 7 characterised in that the cover layer or layers (2, 3) is or are connected with a panel-like surface by way of a laminate layer disposed therebelow or a fibre material-containing layer to the supporting core (1).

9. A shaped object according to one of claims 1 to 8 characterised in that a number of supporting cores (1) is arranged one above the other, with the interposition of one or more cover layers (2, 3).

10. A shaped object according to one of claims 1 to 9 characterised in that disposed in the supporting core (1) is a further cover layer (2) which if necessary can be divided up parallel to its wide sides.

11. A shaped object according to one of claims 1 to 10 wherein the supporting core (2) is encased with cover layers (2, 3) and side wall cover layers (23) characterised in that the individual cover layers (2, 3) have unidirectionally disposed fibres, preferably with a fibre orientation of 0° in the tension and compression zones relative to the longitudinal direction of the shaped object while at the side flanks they are disposed perpendicularly thereto at 90°.

**12.** A process for the production of a shaped object according to claim 1 characterised in that to form the supporting core a dry mass of grains comprising inorganic ceramic material is mixed with a fluid, hot-hardenable or cold-hardenable synthetic resin to form a pasty mass, that the mass is shaped and at least one cover layer is applied to the shaped mass and that the synthetic resin is foamed and polymerised out while being compressed and/or compacted.

**13.** A process according to claim 12 characterised in that firstly a cover panel is made from a woven fabric, a knitted fabric or laminate, which is impregnated with polymerisable synthetic resin, whereupon the cover panel is coated with the pasty mass comprising synthetic resin-impregnated expanded clay and/or pumice, or the cover panel is applied to the mass, and then polymerised out by mechanical compacting, pressing and/or filling into a mould with one or more cover panels.

**14.** A process according to claim 12 and claim 13 characterised in that the operation of compacting the mass comprising expanded clay and/or pumice and polymerisable resin is effected by ultrasound.

**15.** A process according to claim 12 and claim 13 characterised in that the synthetic resin used in the mass of expanded clay or pumice is caused to foam up by over-reaction of the components.

**16.** A process according to one of claims 12 to 15 characterised in that the pasty mass is applied to cover layers provided with hardening bonding agent and then pressed to said cover layers until hardening occurs, possibly with the interposition of a heating step.

**17.** A process according to claim 16 characterised in that the cover layers comprise laminate material, malamine resin panels or marble.

**Revendications**

**1.** Objet formé contenant un noyau de support, dont le noyau d'appui (1), formant la zone statiquement neutre, est composé de grains formés d'un matériau anorganique, entourés d'une résine synthétique durcie, le noyau de support (1) étant recouvert, sur au moins une surface superficielle, par une couche de recouvrement (2,3) et relié à celle-ci, caractérisé en ce que les grains sont en matériau céramique et en ce que les espaces intermédiaires formés entre les grains sont remplis par une résine synthétique alvéolaire.

**2.** Objet formé selon la revendication 1, caractérisé en ce que la couche de recouvrement (2,3) est reliée au noyau de support (1) par l'intermédiaire d'un agent adhésif durci, l'agent adhésif, de préférence une résine synthétique durcissable à chaud ou à froid, présentant une consistance identique ou analogue à celle de la résine synthétique qui entoure les grains.

**3.** Objet formé selon la revendication 1, caractérisé en ce que les grains sont en argile expansée et/ou en pierre ponce.

**4.** Objet formé selon la revendication 1 ou 2, caractérisé en ce que la couche de recouvrement (2,3) est composée d'au moins une couche de fibres posées de façon unidirectionnelle, les fibres étant reliées entre elles grâce à des bandes de matériau (4,4') transversales, présentant un collage.

**5.** Objet formé selon la revendication 1 ou 2, caractérisé en ce que la couche de recouvrement (2,3) est composée d'une plaque en matière synthétique liée par de la résine mélamine, de préférence une plaque d'une substance stratifiée.

**6.** Objet formé selon la revendication 1 ou 2, caractérisé en ce que les couches de recouvrement (2,3) sont en marbre et/ou en bois et/ou en placage et/ou en liège.

**7.** Objet formé selon la revendication 1, caractérisé en ce que des espaces creux (14) sont prévus dans l'objet formé, dans la zone statiquement neutre.

**8.** Objet formé selon l'une des revendications 1 à 7, caractérisé en ce que la ou les couche(s) de recouvrement (2,3) à la surface plate est (sont) reliée(s) au noyau de support (1) par l'intermédiaire d'une couche de laminé sous-jacente, respectivement une couche contenant un matériau fibreux.

**9.** Objet formé selon l'une des revendications 1 à 8, caractérisé en ce qu'il est disposé un certain nombre de noyaux de support (1) superposés, en intercalant une ou plusieurs couches de recouvrement (2,3).

**10.** Objet formé selon l'une des revendications 1 à 9, caractérisé en ce qu'une couche de recouvrement (2) supplémentaire, qui est dissociable parallèlement à ses faces larges en cas de besoin, est disposée dans le noyau de support (1).

11. Objet formé selon l'une des revendications 1 à 10, dans lequel le noyau de support (1) est enveloppé de couches de recouvrement (2,3) et de couches de recouvrement de parois latérales (23), caractérisé en ce que les différentes couches de recouvrement (2,3) présentent des fibres placées de façon unidirectionnelle, de préférence avec une orientation des fibres de 0° par rapport à la direction longitudinale de l'objet formé, dans les zones de traction et de compression, tandis qu'elles sont disposés à 90° de cette direction, sur les flancs latéraux.

12. Procédé de fabrication d'un objet formé selon la revendication 1, caractérisé en ce que, pour former le noyau de support, une masse sèche composée de grains formés d'un matériau anorganique céramique, est mélangée à une résine synthétique liquide, durcissable à chaud ou à froid, pour donner une masse pâteuse, en ce que la masse est formée et au moins une couche de recouvrement est appliquée sur la masse formée, et en ce que la résine synthétique est moussée et polymérisée tout en étant soumise à une pression, respectivement une compression.

13. Procédé selon la revendications 12, caractérisé en ce que l'on fabrique d'abord une plaque de recouvrement en un produit tissé, tricoté ou laminé, qui est imbibé d'une résine synthétique polymérisable, la plaque de recouvrement étant ensuite enduite de la masse pâteuse, composée d'argile expansée et/ou de pierre ponce imbibée de résine synthétique, respectivement appliquée sur la masse, et, ensuite, en étant soumise à une compression, un pressage et/ou un bourrage mécanique, polymérisée dans un moule, avec une ou plusieurs plaques de recouvrement.

14. Procédé selon les revendications 12 et 13, caractérisé en ce que la compression de la masse pâteuse, composée d'argile expansée et/ou de pierre ponce et de résine polymérisable est effectuée par ultra-sons.

15. Procédé selon les revendications 12 et 13, caractérisé en ce que la résine synthétique utilisée dans la masse en argile expansée, respectivement en pierre ponce, est portée au moussage par surréaction des composants.

16. Procédé selon l'une des revendications 12 et 13, caractérisé en ce que la masse pâteuse est appliquée sur des couches de recouvrement pourvues d'agent adhésif en cours de durcissement et ensuite pressée avec ces couches de recouvrement, jusqu'au durcissement, le cas échéant, avec interposition d'un chauffage.

17. Procédé selon la revendication 16, caractérisé en ce que les couches de recouvrement sont en placage, en panneaux de résine mélamine ou en marbre.

Fig.1

Fig. 2

Fig. 3

*Fig.4*

*Fig.5*

*Fig.6*

*Fig.7*

_Fig. 8_

_Fig. 9_